# EUROPÄISCHE PATENTSCHRIFT

(11) **EP 2 584 242 B1**
(45) Veröffentlichungstag und Bekanntmachung des Hinweises auf die Patenterteilung: **07.06.2017**
(21) Anmeldenummer: 12004818.6
(22) Anmeldetag: 28.06.2012
(51) Int. Cl.: F16L 33/30, F16L 37/098

(54) **LÖSBARE STECKVERBINDUNG**
RELEASABLE PLUG CONNECTOR
RACCORD MÂLE-FEMELLE LIBÉRABLE

(30) Priorität: 18.10.2011 DE 202011106817 U
(43) Veröffentlichungstag der Anmeldung: 24.04.2013
(73) Patentinhaber: Neoperl GmbH, 79379 Müllheim (DE)
(72) Erfinder: Kury, Werner, 79379 Müllheim (DE)
(74) Vertreter: Kunst, Manuel Nikolaus Johannes

(56) Entgegenhaltungen:
- EP-A1- 2 497 991
- EP-A2- 1 070 899
- WO-A1-2004/033023
- DE-A1-102008 013 565
- FR-A1- 2 780 765

## Beschreibung

Die Erfindung betrifft eine lösbare Steckverbindung mit einem hülsenförmigen Verbindungselement, in dessen Hülseninnenraum ein ebenfalls hülsenförmiges Aufnahmeteil eingesetzt ist, in dessen Innenraum wiederum ein rohrförmiges Einsteckteil eingeführt ist, das an seinem Außenumfang eine umlaufende Halterippe trägt, und mit einem Sicherungselement aus hartelastischem Material, das nach innen gerichtete, elastisch auffederbare Haltekante zum Hintergreifen der Halterippe nach dem Eindrücken des Einsteckteils aufweist, welche Haltekanten über V-förmig zusammengeführte Federstege untereinander verbunden sind und die durch Druckbeaufschlagung der zusammengeführten Stegendbereiche der Federstege derart auffederbar sind, dass die Haltekanten von der Halterippe außer Eingriff kommen.

Aus der EP 605 801 B1 ist bereits eine lösbare Steckverbindung der eingangs erwähnten Art vorbekannt, die als Schlauchkupplung zum Verbinden von zwei Leitungsabschnitten einer Flüssigkeitsleitung dient. Diese Steckverbindung entspricht dem Oberbegriff des Anspruchs 1. Die vorbekannte Steckverbindung weist ein Verbindungselement auf, das mit einem hülsenförmigen Aufnahmeteil einstückig verbunden ist. In den Innenraum des hülsenförmigen Aufnahmeteils ist ein rohrförmiges Einsteckteil einführbar, das an seinem Außenumfang eine umlaufende Halterippe trägt. In Kupplungsstellung der vorbekannten Steckkupplung wird die Halterippe nach dem Eindrücken des Einsteckteils in das Aufnahmeteil von nach innen gerichtesten und elastisch auffederbaren Haltekanten eines Sicherungselementes hintergriffen. Die Haltekanten des aus hartelastischem Material hergestellten Sicherungselementes sind über v-förmig zusammengeführte Federstege untereinander verbunden und können durch Druckbeaufschlagung der zusammengeführten Stegendbereiche der Federstege derart aufgefedert werden, dass die Haltekanten von der Halterippe außer Eingriff kommen. Um die Position des in das Verbindungselement eingeschobenen Sicherungselementes zu sichern, sind an den zusammengeführten Stegendbereichen plattenförmige Drucktaster angeformt, die in Gebrauchsstellung in jeweils eine komplementär ausgebildete Durchgriffsöffnung in der Umfangswandung des Verbindungselementes vorstehen. Es mag ein besonderer Vorteil sein, dass das mit dem einem Leitungsabschnitt verbundene Verbindungselement, das an dem anderen Leitungsabschnitt angreifende Einsteckteil und das Sicherungselement als Kunststoffspritzgussteile ausgebildet werden können. Die Herstellung dieser aufeinander abgestimmten Kunststoffformteile ist jedoch mit einem erheblichen Aufwand verbunden. Darüber hinaus besteht die Gefahr, dass übermäßige Druckbelastungen, die auf das verbindungselement und/oder das Einsteckteil quer zu deren Längserstreckung einwirken, zu einem Bruch zumindest eines dieser Kunststoffteile und zu unerwünschten Undichtigkeiten führen.

Aus der FR 2 780 765 A1 ist bereits eine lösbare Steckverbindung vorbekannt, die ein hülsenförmiges Aufnahmeteil hat, dessen Innenraum zum Einführen eines rohrförmigen Einsteckteiles bestimmt ist, das an seinem Außenumfang eine umlaufende Halterippe beträgt. Das Aufnahmeteil ist in einem rohrförmigen Verbindungselement gehalten, das an seinem schlauchseitigen Ende als Schlauchnippel ausgebildet ist. Die vorbekannte Steckverbindung weist ein Sicherungselement aus hartelastischem Material auf, das nach innen gerichtete, elastisch auffederbare Haltekanten zum Hintergreifen der Halterippe nach dem Eindrücken des Einsteckteils hat. Bei der vorbekannten Steckverbindung sind das Sicherungselement einerseits und das Verbindungselement andererseits durch das Aufnahmeteil voneinander getrennt und werden aus unterschiedlichen Materialien getrennt voneinander hergestellt. Da das Sicherungselement und das Verbindungselement aus unterschiedlichen Materialien getrennt voneinander hergestellt werden, sind bei diesen Bauteilen der vorbekannten Steckverbindung auch keine auslenkbaren Federstege vorgesehen. Soweit die vorbekannte Steckverbindung Federstege hat, sind diese zwischen dem Sicherungselement und dem Aufnahmeteil angeordnet. Die vorbekannte Steckverbindung ist daher vergleichsweise vielteilig und aufwendig in der Herstellung.

Es besteht daher insbesondere die Aufgabe, eine stabile und belastbare Steckverbindung der eingangs erwähnten Art zu schaffen, die mit einem reduzierten Aufwand herstellbar ist.

Die erfindungsgemäße Lösung dieser Aufgabe besteht darin, dass das Verbindungselement und das Sicherungselement zu einem aus hartelastischen Material hergestellten Formteil einstückig miteinander verbunden sind, und dass das Verbindungselement sowie das Sicherungselement über auslenkbare Federstäbe miteinander verbunden sind, in deren Verlauf oder Verlängerung zumindest eine Haltekante vorgesehen ist.

Bei der erfindungsgemäßen Steckverbindung sind das Verbindungselement und das Sicherungselement zu einem aus hartelastischem Material hergestellten Formteil einstückig verbunden. Das Sicherungselement und das Verbindungselement sind dazu über auslenkbare Federstäbe miteinander verbunden, in deren Verlauf oder Verlängerung zumindest eine Haltekante vorgesehen ist. Auch bei der erfindungsgemäßen Steckverbindung sind die Haltekanten über V-förmig zusammengeführte Federstege untereinander verbunden. Durch Druckbeaufschlagung der zusammengeführten Stegendbereiche dieser Federstege können die auslenkbaren Federstäbe zwischen Verbindungs- und Sicherungselement derart aufgefedert werden, dass die Haltekanten von der Halterippe außer Eingriff kommen. Dabei können die Federstäbe ausreichend stabil und belastbar ausgestaltet werden, um die Leitungsabschnitte in axialer Richtung praktisch spielfrei miteinander zu verbinden. Da auf ein separates Sicherungselement und somit ein weiteres komplettes Kunststoffspritzgussteil verzichtet werden kann, ist die Herstellung der erfindungsgemäßen Steckverbindung mit reduziertem Aufwand möglich.

Um die hohe Belastbarkeit der erfindungsgemäßen Steckverbindung noch zusätzlich zu begünstigen, ist es vorteilhaft, wenn das Aufnahmeteil und/oder das Einsteckteil aus metallischem Material und insbesondere aus Messing hergestellt sind.

Auch die aus metallischem Material vorgesehenen Aufnahme- und/oder Einsteckteile lassen sich gegebenenfalls in großer Stückzahl kostengünstig herstellen, wenn das Aufnahmeteil und/oder das Einsteckteil als Drehteil hergestellt sind.

Die einfache und kostengünstige Herstellung der erfindungsgemäßen Steckverbindung wird begünstigt, wenn das aus Verbindungselement und damit einstückig verbundenem Sicherungselement bestehende Formteil aus hartelastischem Kunststoffmaterial und insbesondere als Kunststoffspritzgussteil hergestellt ist.

Eine bevorzugte Ausführungsform gemäß der Erfindung sieht vor, dass das Aufnahmeteil außenumfangsseitig zumindest einen Anschlag hat und dass das Aufnahmeteil in den Hülseninnenraum des Verbindungselementes einsetzbar ist, bis ein im Hülseninnenraum des Verbindungselementes innenumfangsseitig vorgesehener und vorzugsweise als Ringabsatz oder Ringflansch ausgebildeter Gegenanschlag den Einsatzweg des Aufnahmeteiles an dessen Anschlag begrenzt.

Um die erfindungsgemäße Steckverbindung auf einfache Weise mit einem Leitungsabschnitt und insbesondere mit einer flexiblen Schlauchleitung verbinden zu können, ist es vorteilhaft, wenn der dem Einsetzteil abgewandte Endbereich des Aufnahmeteiles und/oder der dem Aufnahmeteil abgewandte Endbereich des Einsetzteiles als Schlauchnippel ausgebildet ist, auf den das Schlauchende einer vorzugsweise flexiblen Schlauchleitung aufschiebbar ist. Dabei kann auch nur eine flexible Schlauchleitung am Aufnahmeteil oder am Einsetzteil angreifen, während der andere Bestandteil der Erfindungsgemäßen Steckverbindung beispielsweise als unverrückbar gehaltener Geräteanschluss ausbildet ist. Bevorzugt wird jedoch eine Ausführungsform, bei der sowohl am Aufnahmeteil als auch am Einsteckteil das Schlauchende einer flexiblen Schlauchleitung gehalten ist.

Um die mit der erfindungsgemäßen Steckverbindung bewerkstelligte Schlauchkupplung möglichst dicht auszugestalten, ist es vorteilhaft, wenn zwischen dem Aufnahmeteil und dem darin eingesetzten Einsteckteil zumindest eine Ringdichtung abdichtet.

Eine bevorzugte Ausführungsform gemäß der Erfindung sieht dazu vor, dass in den am Einsteckteil anliegenden Teilbereich des Aufnahmeteiles innenumfangsseitig eine Ringnut vorgesehen ist, in welcher Ringnut ein das Einsteckteil außenumfangsseitig dicht umschließender Dichtring vorgesehen ist.

Die einfache Handhabung der erfindungsgemäßen Steckverbindung wird noch begünstigt, wenn an den zusammengeführten Stegendbereichen der Federstege ein Fingertaster zur manuellen Druckbeaufschlagung einstückig angeformt ist. Diese Fingertaster können so ausgebildet sein, dass die Handhabung der erfindungsgemäßen Steckverbindung auch ohne eine schriftliche Bedienungsanleitung sich selbsterklärend ergibt.

Weiterbildungen gemäß der Erfindung ergeben sich aus der Beschreibung in Verbindung mit den Figuren. Nachstehend wird eine bevorzugte Ausführungsform gemäß der Erfindung anhand der Zeichnung noch näher erläutert.

Es zeigt:
- Fig. 1: eine längsgeschnittene Steckverbindung, die zum Verbinden der flexiblen Leitungsabschnitte einer Schlauchleitung bestimmt ist, wobei diese Steckverbindung im Wesentlichen ein Verbindungselement, ein darin gehaltenes Aufnahmeteil, ein in das Aufnahmeteil einführbares Einsteckteil sowie ein Sicherungselement aufweist,
- Fig. 2: das mit dem Sicherungselement zu einem einstückigen Formteil verbundene Verbindungselement der Steckverbindung aus Fig. 1 in einer von seiner Einführöffnung aus gezeigten perspektivischen Darstellung,
- Fig. 3: das aus Verbindungselement und Sicherungselement bestehende Formteil aus Fig. 2 in einer von unten gezeigten perspektivischen Darstellung,
- Fig. 4: das Einsteckteil, das Aufnahmeteil, das mit dem Sicherungselement einstückig verbundene Verbindungselement sowie das am Aufnahmeteil gehaltene Schlauchende der Steckverbindung aus Fig. 1 in einer auseinander gezogenen, teilgeschnittenen und perspektivischen Einzelteildarstellung,
- Fig. 5: die Bestandteile der Steckverbindung aus Fig. 1 und 4 in einer auseinandergezogenen Einzelteildarstellung, wobei hier das Aufnahmeteil bereits in das aus Verbindungselement und damit einstückig verbundenem Sicherungselement bestehende Formteil eingeführt ist,
- Fig. 6: die Bestandteile der Steckverbindung aus den Fig. 1 und 4 bis 5 in einer teilgeschnittenen Perspektivansicht, wobei am Aufnahmeteil, das in dem aus Verbindungselement und Sicherungselement bestehenden Formteil gehalten ist, das Schlauchende einer flexiblen Schlauchleitung angreift, während das Einsteckteil noch außerhalb der Kupplungsposition der Steckverbindung angeordnet ist,
- Fig. 7: die Steckverbindung aus den Fig. 1 und 4 bis 6 in der Kupplungsposition ihrer Bestandteile,
- Fig. 8: die Steckverbindung aus den Fig. 1 und 4 bis 7 in einer Draufsicht auf das nur bereichsweise in das Aufnahmeteil eingeschobene Einsteckteil,
- Fig. 9: die Steckverbindung aus den Fig. 1 und 4 bis 8 in einer teilgeschnittenen Perspektivansicht gemäß Fig. 8,
- Fig. 10: die Steckverbindung aus den Fig. 1 und 4 bis 9 in einem Längsschnitt durch Schnittebene X-X in Fig. 8,
- Fig. 11: die Steckverbindung aus den Fig. 1 und 4 bis 10 in einer Draufsicht auf das in die Kupplungsposition vorgeschobene Einsteckteil,
- Fig. 12: die Steckverbindung aus den Fig. 1 und 4 bis 11 in einer teilgeschnittenen Perspektivansicht in der in Fig. 11 gezeigten Kupplungsposition, und
- Fig. 13: die Steckverbindung aus den Fig. 1 und 4 bis 12 in einem Längsschnitt durch Schnittebene XIII-XIII aus Fig. 11.

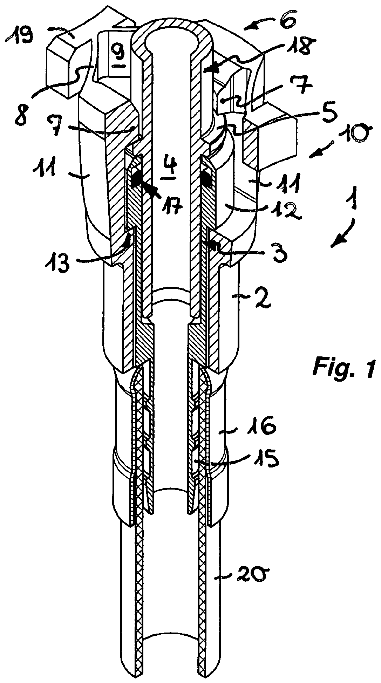

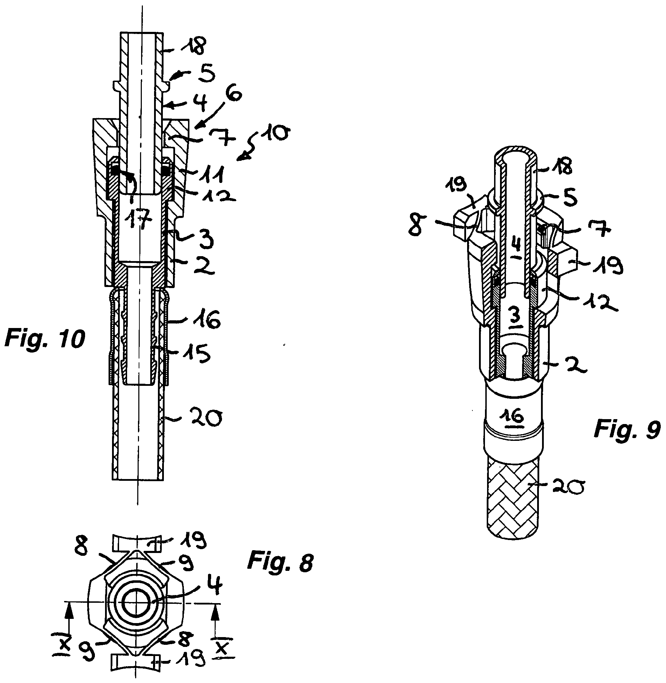

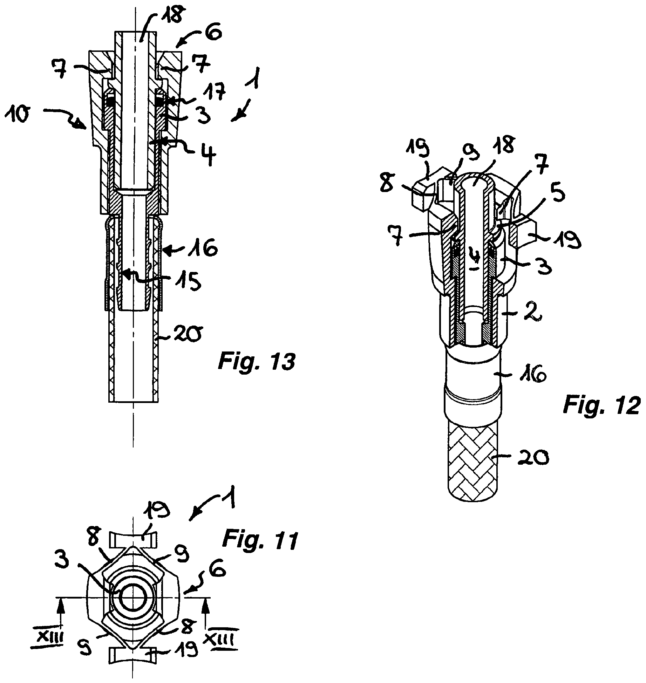

In den Fig. 1 bis 13 ist eine lösbare Steckverbindung 1 dargestellt, die zur kuppelnden Verbindung von zwei Leitungsabschnitten dient. Die Steckverbindung 1 ist vorzugsweise zur kuppelnden Verbindung von zwei Leitungsabschnitten einer Flüssigkeitsleitung und insbesondere einer sanitären Wasserleitung vorgesehen.

Die Steckverbindung 1 weist ein Verbindungselement 2 auf, welches mit einem hülsenförmigen Aufnahmeteil 3 verbunden ist. In den Innenraum des hülsenförmigen Aufnahmeteiles 3 ist ein rohrförmiges Einsteckteil 4 einführbar, das an seinem Rohraußenumfang eine umlaufende Halterippe 5 trägt. Die Steckverbindung 1 weist auch ein Sicherungselement 6 auf, das nach innen gerichtete Haltekanten 7 hat, die zum Hintergreifen der Halterippe 5 nach dem Eindrücken des rohrförmigen Einsteckteils 4 in das Aufnahmeteil 3 bestimmt sind.

Während das Aufnahmeteil 3 an seinem dem Einsteckteil 4 abgewandten Ende mit dem einen Leitungsabschnitt verbunden ist, greift das rohrförmige Einsteckteil 4 mit seinem dem Aufnahmeteil 3 abgewandten Endbereich an dem anderen Leitungsabschnitt an. Dabei kann der eine Leitungsabschnitt beispielsweise als Geräteanschluss eines wasserführenden oder -verbrauchenden Gerätes dienen, während der andere Leitungsabschnitt den Wasserzulauf oder -ablauf bildet. Zumindest einer dieser Leitungsabschnitte und vorzugsweise beide Leitungsabschnitte sind als flexible und insbesondere mit einem Metallgeflecht umwickelte Schlauchleitungen 20 ausgestaltet.

Die vorzugsweise paarweise auf gegenüberliegenden Seiten an der Halterippe 5 des Einsteckteiles 4 angreifenden Haltekanten 7 sind über V-förmig zusammengeführte Federstege 8, 9 untereinander verbunden und können durch manuelle Druckbeaufschlagung der zusammengeführten Stegendbereiche der Federstege 8, 9 derart aufgefedert werden, dass die Haltekanten 7 von der Halterippe 5 außer Eingriff kommen.

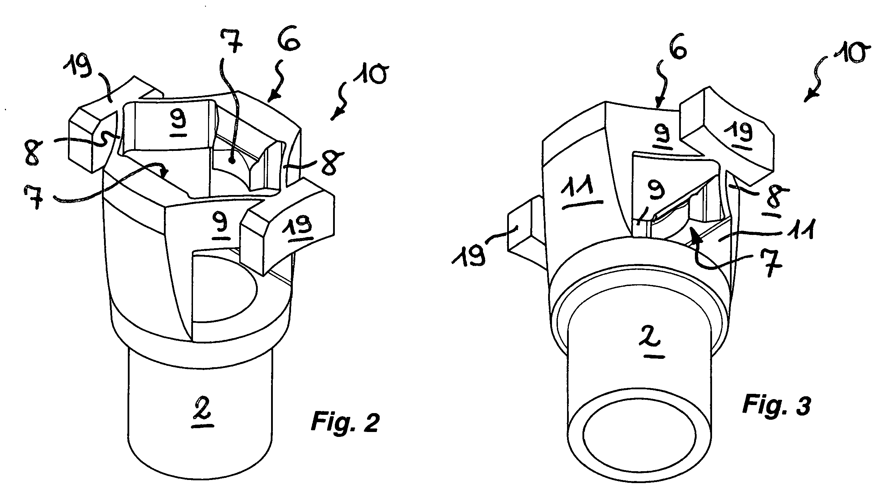

In den Einzelteildarstellungen gemäß Fig. 2 und 3 wird deutlich, dass das Verbindungselement 2 und das Sicherungselement 6 zu einem aus hartelastischem Material hergestellten Formteil 10 einstückig miteinander verbunden sind. Das Verbindungselement 2 und das Sicherungselement 6 sind dazu über auslenkbare Federstäbe 11 miteinander verbunden, in deren Verlauf oder Verlängerung zumindest eine Haltekante 7 vorgesehen ist.

Bei der hier dargestellten Steckverbindung 1 sind das Verbindungselement 2 und das Sicherungselement 6 zu einem aus hartelastischem Material hergestellten Formteil 10 einstückig verbunden. Das Sicherungselement 6 und das Verbindungselement 2 sind dazu über auslenkbare Federstäbe 11 miteinander verbunden, in deren Verlauf oder Verlängerung zumindest eine Haltekante 7 vorgesehen ist. Die Haltekanten 7 der Steckverbindung 1 sind über V-förmig zusammengeführte Federstege 8, 9 untereinander verbunden. Durch Druckbeaufschlagung der zusammengeführten Stegendbereiche dieser Federstege 8, 9 können die auslenkbaren Federstäbe 11 zwischen Verbindungs- und Sicherungselement 2, 6 derart aufgefedert werden, dass die Haltekanten 7 von der Halterippe 5 außer Eingriff kommen. Dabei können die Federstäbe 11 ausreichend stabil und belastbar ausgestaltet werden, um die Leitungsabschnitte in axialer Richtung praktisch spielfrei miteinander zu verbinden. Da auf ein separates Sicherungselement 6 und somit auf ein weiteres komplexes Kunststoff-Spritzgussteil verzichtet werden kann, ist die Herstellung der Steckverbindung 1 mit reduziertem Aufwand möglich.

Damit die Steckverbindung 1 auch quer zu ihrer Längserstreckung einwirkende Querkräfte gut aufnehmen kann, ohne dass es zu Materialbrüchen und unerwünschten Leckagen kommt, sind das hülsenförmige Aufnahmeteil 3 und/oder das rohrförmige Einsteckteil 4 aus metallischem Material und insbesondere aus Messing hergestellt. Dabei wird eine kostengünstige Serienfertigung dieser Metallteile begünstigt, wenn das Aufnahmeteil 3 und/oder das Einsteckteil 4 als Drehteile hergestellt sind.

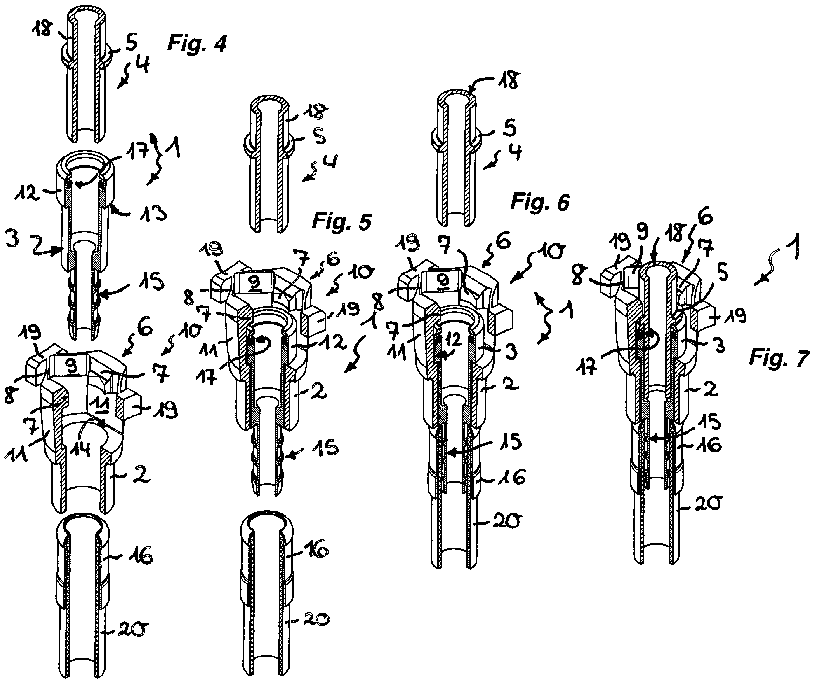

Demgegenüber kann das aus Verbindungselement 2 und damit einstückig verbundenem Sicherungselement 6 bestehende Formteil 10 aus hartelastischem Kunststoffmaterial und insbesondere als Kunststoffspritzgussteil hergestellt sein. Das Aufnahmeteil 3 weist an seinem dem Einsteckteil 4 zugewandten Endbereich außenumfangsseitig eine Querschnittserweiterung 12 auf. Dabei ist das Aufnahmeteil 3 an den Haltekanten 7 des Sicherungselementes 6 vorbei in den Hülseninnenraum des hülsenförmigen Verbindungselementes 2 einsetzbar, bis ein hier als außenumfangsseitiger Ringabsatz 13 ausgebildeter Anschlag des Aufnahmeteils 3 an einem am Verbindungselement 2 vorgesehenen und als Gegenanschlag dienenden Ringabsatz 14 anschlägt. In dieser, beispielsweise in Fig. 1 und 6 gezeigten Kupplungsstellung steht das Anschlussteil 3 mit seinem hier als Schlauchnippel 15 ausgebildeten Endbereich über das dem Einsteckteil 4 abgewandte Stirnende des Verbindungselementes 2 vor. Auf den als Schlauchnippel 15 ausgebildeten Endbereich des Anschlussteiles 3 ist das Schlauchende 20 einer hier beispielsweise durch ein Metallgeflecht oder dergleichen verstärkten Schlauchleitung aufgeschoben und dort mittels einer Quetschhülse 16 gesichert, die das Schlauchende 20 umschließt und auf den Schlauchnippel 15 presst. Durch den Anschlag am Aufnahmeteil 3 und das an dessen Schlauchnippel 15 gesicherte Schlauchende 20 ist das Aufnahmeteil 3 am Verbindungselement 2 in axialer Richtung unverrückbar gehalten.

Zwischen dem Aufnahmeteil 3 und dem darin in Kupplungsposition eingesetzten Einsteckteil 4 dichtet zumindest eine Ringdichtung ab. Das Aufnahmeteil 3 weist dazu vorzugsweise im Bereich seiner Querschnittserweiterung 12 eine Ringnut auf, in die ein in Kupplungsposition der Steckverbindung 1 am Einsteckteil 4 dicht anliegender Dichtring 17 gehalten ist.

Aus einer zusammenschauenden Betrachtung der Fig. 4 bis 7 oder Fig. 8 bis 13 wird deutlich, dass das Einsteckteil 4 in den Innenraum des Aufnahmeteiles 3 eingedrückt werden kann, bis die am Einsteckteil 4 vorgesehene Halterippe 5 von den in Verlängerung der Federstäbe 11 angeordneten Haltekanten 7 hintergriffen wird. In dieser Kupplungsposition der Steckverbindung 1 ist die am Einsteckteil 4 vorgesehene Halterippe 5 zwischen der benachbarten Stirnfläche des Aufnahmeteiles 3 einerseits und den Haltekanten 7 andererseits in axialer Richtung unverrückbar, aber verdrehbar gehalten. In den Fig. 4 bis 7 ist erkennbar, dass auch der dem Aufnahmeteil 3 abgewandte Endbereich 18 des Einsteckteiles 4 als Schlauchnippel ausgebildet sein kann, auf den das eine Schlauchende einer hier nicht weiter dargestellten flexiblen Schlauchleitung aufgeschoben und vorzugsweise ebenfalls mittels einer Quetschhülse gesichert werden kann.

Durch Druckbeaufschlagung der zusammengeführten Enden der Federstege 8, 9 lassen sich die Federstäbe 11 auslenken und die in ihrer Verlängerung angeordneten Haltekanten 7 derart ausfedern, dass die Haltekanten 7 an der Halterippe 5 außer Eingriff kommen und das Einsteckteil 4 der Steckverbindung 1 vom Verbindungselement 2 und dem davon umgriffenen Aufnahmeteil 3 zumindest zeitweise wieder gelöst werden kann.

### Bezugszeichenliste

- 1: Steckverbindung
- 2: Verbindungselement
- 3: Aufnahmeteil
- 4: Einsteckteil
- 5: Halterippe
- 6: Sicherungselement
- 7: Haltekanten
- 8: Federsteg
- 9: Federsteg
- 10: Formteil (aus Verbindungselement 2 und Sicherungselement 6)
- 11: Federstäbe (zwischen Verbindungselement 2 und Sicherungselement 6)
- 12: Querschnittserweiterung (des Aufnahmeteiles 3)
- 13: Ringabsatz (am Aufnahmeteil 3)
- 14: Ringabsatz (am Verbindungselement 2)
- 15: Schlauchnippel
- 16: Quetschhülse
- 17: Dichtring
- 18: Endbereich (als Schlauchnippel am Einsteckteil 4)
- 19: Drucktaster
- 20: Schlauchende

## Patentansprüche

1. Lösbare Steckverbindung (1) mit einem hülsenförmigen Verbindungselement (2), einem Aufnahmeteil (3) und einem Einsteckteil (4), wobei im Hülseninnenraum des Verbindungselements das ebenfalls hülsenförmig Aufnahmeteil (3) eingesetzt ist, in dessen Innenraum wiederum das rohrförmige Einsteckteil (4) einführbar ist, wobei quer zu seiner Längserstreckung einwirkende Querkräfte gut aufgenommen werden, wobei das Einsteckteil (4) an seinem Außenumfang eine umlaufende Halterippe (5) trägt, und mit einem Sicherungselement (6) aus hartelastischem Material, das nach innen gerichtete, elastisch auffederbare Haltekanten (7) zum Hintergreifen der Halterippe (5) nach dem Eindrücken des Einsteckteils (4) aufweist, welche Haltekanten (7) über V-förmig zusammengeführte Federstege (8, 9) untereinander verbunden sind und die (8, 9) durch Druckbeaufschlagung der zusammengeführten Stegendbereiche der Federstege (8, 9) derart auffederbar sind, dass die Haltekanten (7) von der Halterippe (5) außer Eingriff kommen, **dadurch gekennzeichnet, dass** das Verbindungselement (2) und das Sicherungselement (6) zu einem aus hartelastischem Material hergestellten Formteil (10) einstückig miteinander verbunden sind und dass das Verbindungselement (2) sowie das Sicherungselement (6) über auslenkbare Federstäbe (11) miteinander verbunden sind, in deren Verlauf oder Verlängerung zumindest einer Haltekante (7) vorgesehen ist.

2. Steckverbindung nach Anspruch 1, **dadurch gekennzeichnet, dass** das Aufnahmeteil (3) und/oder das Einsteckteil (4) aus metallischem Material und insbesondere aus Messing hergestellt sind.

3. Steckverbindung nach Anspruch 2, **dadurch gekennzeichnet, dass** das Aufnahmeteil (3) und/oder das Einsteckteil (4) als Drehteile hergestellt sind.

4. Steckverbindung nach einem der Ansprüche 1 bis 3, **dadurch gekennzeichnet, dass** das aus Verbindungselement (2) und damit einstückig verbundenem Sicherungselement (6) bestehende Formteil (10) als hartelastischem Kunststoffmaterial und insbesondere als Kunststoffspritzgussteil hergestellt ist.

5. Steckverbindung nach einem der Ansprüche 1 bis 4, **dadurch gekennzeichnet, dass** das Aufnahmeteil (3) außenumfangsseitig einen Anschlag hat und dass das Aufnahmeteil (3) in den Hülseninnenraum des Verbindungselementes (2) einsetzbar ist, bis ein im Hülseninnenraum des Verbindungselementes (2) innenumfangsseitig vorgesehener und vorzugsweise als Ringabsatz oder Ringflansch ausgebildeter Gegenanschlag den Einsetzweg des Aufnahmeteiles (3) an dessen Anschlag begrenzt.

6. Steckverbindung nach einem der Ansprüche 1 bis 5, **dadurch gekennzeichnet, dass** der dem Einsteckteil (4) abgewandte Endbereich des Aufnahmeteiles (3) und/oder der dem Aufnahmeteil (3) abgewandte Endbereich des Einsteckteiles (4) als Schlauchnippel (15; 18) ausgebildet ist, auf den das Schlauchende (20) einer vorzugsweise flexiblen Schlauchleitung aufschiebbar ist.

7. Steckverbindung nach einem der Ansprüche 1 bis 6, **dadurch gekennzeichnet, dass** zwischen dem Aufnahmeteil (3) und dem darin eingesetzten Einsteckteil (4) zumindest eine Ringdichtung abdichtet.

8. Steckverbindung nach einem der Ansprüche 1 bis 7, **dadurch gekennzeichnet, dass** in dem am Einsteckteil (4) anliegenden Teilbereich des Aufnahmeteiles (3) innenumfangsseitig eine Ringnut vorgesehen ist, in welche Ringnut ein das Einsteckteil (4) außenumfangsseitig dicht umschließender Dichtring vorgesehen ist.

9. Steckverbindung nach einem der Ansprüche 1 bis 8, **dadurch gekennzeichnet, dass** an den zusammengeführten Stegendbereichen der Federstege (8, 9) ein Fingertaster (19) zur manuellen Druckbeaufschlagung einstückig angeformt ist.

## Claims

1. Detachable plug connector (1) having a sleeve-shaped connecting element (2), a receiving part (3) and a plug-in part (4), wherein the receiving part (3), which is likewise sleeve-shaped, is inserted in the sleeve interior (2) of the connecting element, the tubular plug-in part (4) being able to be inserted in turn into the interior of the receiving part, wherein transverse forces acting transverse to the longitudinal extension thereof are effectively absorbed, wherein the plug-in part (4) bears a peripheral holding rib (5) on its outer periphery, and having a securing element (6) which consists of energy-elastic material and comprises inwardly-directed, elastically resilient holding edges (7) for engaging behind the holding rib (5) after pressing in the plug-in part (4), which holding edges (7) are connected together via spring webs (8, 9) which are fitted together in a V-shaped manner and the spring webs (8, 9) are resilient, by applying pressure to the fitted together web end regions of the spring webs (8, 9), such that the holding edges (7) are disengaged from the holding rib (5), **characterised in that** the connecting element (2) and the securing element (6) are connected together in one piece to form a moulded part (10) produced from energy-elastic material, and **in that** the connecting element (2) and the securing element (6) are connected together via deflectable spring bars (11), at least one holding edge (7) being provided in the course or extension of the spring bars.

2. Plug connector as claimed in claim 1, **characterised in that** the receiving part (3) and/or the plug-in part (4) are produced from metallic material, and in particular from brass.

3. Plug connector as claimed in claim 2, **characterised in that** the receiving part (3) and/or the plug-in part (4) are produced as rotary parts.

4. Plug connector as claimed in any one of claims 1 to 3, **characterised in that** the moulded part (10) consisting of the connecting element (2) and the securing element (6) connected thereto in one piece is produced as energy-elastic synthetic material and in particular as a synthetic material injection-moulded part.

5. Plug connector as claimed in any one of claims 1 to 4, **characterised in that** the receiving part (3) has, on the outer periphery, a stop, and **in that** the receiving part (3) can be inserted into the sleeve interior of the connecting element (2) until a counter-stop - provided on the inner periphery of the sleeve interior of the connecting element (2) and preferably formed as an annular shoulder or annular flange - limits the insertion path of the receiving part (3) at the stop thereof.

6. Plug connector as claimed in any one of claims 1 to 5, **characterised in that** the end region of the receiving part (3) facing away from the plug-in part (4) and/or the end region of the plug-in part (4) facing away from the receiving part (3) is/are formed as a hose nipple (15; 18), onto which the hose end (20) of a preferably flexible hose line can be pushed.

7. Plug connector as claimed in any one of claims 1 to 6, **characterised in that** at least one annular seal provides a sealing effect between the receiving part (3) and the plug-in part (4) inserted therein.

8. Plug connector as claimed in any one of claims 1 to 7, **characterised in that** an annular groove is provided on the inner periphery of the partial region of the receiving part (3) lying against the plug-in part (4), a sealing ring - which sealingly surrounds the plug-in part (4) on the outer periphery - being provided in the annular groove.

9. Plug connector as claimed in any one of claims 1 to 8, **characterised in that** a finger button (19) for manually applying pressure is integrally formed on the assembled web end regions of the spring webs (8, 9).

## Revendications

1. Raccord mâle-femelle libérable (1) avec un élément de raccord en forme de douille (2), une partie de réception (3) et une partie enfichable (4), dans lequel la partie de réception (3) également en forme de douille est introduite dans l'espace intérieur de douille de l'élément de raccord, dans l'espace intérieur de laquelle la partie enfichable tubulaire (4) peut de nouveau être introduite, dans lequel des forces transversales agissant transversalement à son extension longitudinale sont bien reprises, dans lequel la partie enfichable (4) porte une nervure de retenue périphérique (5) sur sa périphérie extérieure, et avec un élément de sécurité (6) en matériau élastique dur, qui présente des bords de maintien (7) orienté vers l'intérieur et élastiquement déformables pour l'accrochage sur la nervure de retenue (5) après l'insertion de la partie enfichable (4), lesdits bords de maintien (7) étant reliés l'un à l'autre par des pattes élastiques (8, 9) réunies en forme de V et pouvant (8, 9) s'écarter élastiquement par pression sur les zones d'extrémité de patte réunies des pattes élastiques (8, 9), de telle manière que les bords de maintien (7) se dégagent de la nervure de retenue (5), **caractérisé en ce que** l'élément de raccord (2) et l'élément de sécurité (6) sont reliés l'un à l'autre d'une seule pièce en une pièce moulée (10) fabriquée en un matériau élastique dur et **en ce que** l'élément de raccord (2) ainsi que l'élément de sécurité (6) sont reliés l'un à l'autre par des barres élastiques déformables (11), dans le tracé ou le prolongement desquelles il est prévu au moins un bord de maintien (7).

2. Raccord mâle-femelle selon la revendication 1, **caractérisé en ce que** la partie de réception (3) et/ou la partie enfichable (4) est/sont fabriquée(s) en un matériau métallique et en particulier en laiton.

3. Raccord mâle-femelle selon la revendication 2, **caractérisé en ce que** la partie de réception (3) et/ou la partie enfichable (4) est/sont fabriquée(s) sous forme de parties tournées.

4. Raccord mâle-femelle selon l'une quelconque des revendications 1 à 3, **caractérisé en ce que** la pièce moulée (10) composée de l'élément de raccord (2) et de l'élément de sécurité (6) relié d'une pièce à celui-ci est fabriquée sous forme de matériau élastique dur en matière plastique et en particulier sous forme de pièce moulée par injection en matière plastique.

5. Raccord mâle-femelle selon l'une quelconque des revendications 1 à 4, **caractérisé en ce que** la partie de réception (3) comporte une butée en périphérie extérieure et **en ce que** la partie de réception (3) peut être introduite dans l'espace intérieur de douille de l'élément de raccord (2), jusqu'à ce qu'une contrebutée prévue en périphérie intérieure dans l'espace intérieur de douille de l'élément de raccord (2) et configurée de préférence sous forme d'épaulement annulaire ou de bride annulaire limite la course d'introduction de la partie de réception (3) à sa butée.

6. Raccord mâle-femelle selon l'une quelconque des revendications 1 à 5, **caractérisé en ce que** la région d'extrémité de la partie de réception (3) située à l'opposé de la partie enfichable (4) et/ou la région d'extrémité de la partie enfichable (4) située à l'opposé de la partie de réception (3) est réalisée en forme de raccord de tuyau (15 ; 18), sur lequel l'extrémité de tuyau (20) d'un tuyau de préférence flexible peut être engagée.

7. Raccord mâle-femelle selon l'une quelconque des revendications 1 à 6, **caractérisé en ce qu'**au moins un joint torique assure l'étanchéité entre la partie de réception (3) et la partie enfichable (4) introduite dans celle-ci.

8. Raccord mâle-femelle selon l'une quelconque des revendications 1 à 7, **caractérisé en ce qu'**il est prévu en périphérie intérieure dans la région partielle de la partie de réception (3) appliquée sur la partie enfichable (4) une rainure annulaire, rainure annulaire dans laquelle il est prévu un anneau d'étanchéité entourant de façon étanche en périphérie extérieure la partie enfichable (4).

9. Raccord mâle-femelle selon l'une quelconque des revendications 1 à 8, **caractérisé en ce qu'**une touche digitale (19) pour l'application manuelle d'une pression est formée d'une seule pièce sur les zones d'extrémité de patte réunies des pattes élastiques (8, 9).
